**Europäisches Patentamt**

**European Patent Office**

**Office européen des brevets**

(19)

(11) Veröffentlichungsnummer : **0 381 177 B1**

(12) # EUROPÄISCHE PATENTSCHRIFT

(45) Veröffentlichungstag der Patentschrift :
**03.06.92 Patentblatt 92/23**

(21) Anmeldenummer : **90101876.2**

(22) Anmeldetag : **31.01.90**

(51) Int. Cl.⁵ : **A47J 43/20,** A47J 36/02,
A23G 9/00, A23G 9/02,
B65D 65/38, A21D 13/08,
A21B 3/13

(54) **Backform.**

(30) Priorität : **02.02.89 DE 3903004**

(43) Veröffentlichungstag der Anmeldung :
**08.08.90 Patentblatt 90/32**

(45) Bekanntmachung des Hinweises auf die
Patenterteilung :
**03.06.92 Patentblatt 92/23**

(84) Benannte Vertragsstaaten :
**AT BE CH DK FR GB IT LI NL**

(56) Entgegenhaltungen :
**EP-A- 0 219 462**
**AU-A- 4 070 868**
**DE-U- 8 628 509**

(56) Entgegenhaltungen :
**FR-A- 2 435 204**
**US-A- 2 508 724**
**US-A- 2 759 826**
**US-A- 3 290 154**
**US-A- 4 765 998**

(73) Patentinhaber : **W. u. H. Küchle GmbH & Co.**
**Bahnhofstrasse 12**
**W-8870 Günzburg (DE)**

(72) Erfinder : **Küchle, Bruno**
**Mozart-Ring 10**
**W-8870 Günzburg (DE)**

(74) Vertreter : **Liebau, Gerhard, Dipl.-Ing.**
**Birkenstrasse 39 Postfach 22 02 29**
**W-8900 Augsburg 22 (DE)**

EP 0 381 177 B1

EP 0 381 177 B1

## Beschreibung

Die Erfindung betrifft eine Backform in Form eines Hohlgefäßes mit einer den zu backenden Kuchenteig seitlich und unten umschließenden, steifen Wandung.

Bekannte Backformen bestehen üblicherweise aus Blech, Glas, oder auch einem geeigneten Kunststoff. Zu den Backformen in Form eines Hohlgefäßes gemäß dem Oberbegriff des Anspruchs 1 zählen Kasten-, Gugelhupf-, (vergl. Zeitschritt MENÜ Backen von A - Z", ORBIS-Verlay für Publizistik GinbH & Co. KG, D-2000 Hambury, 1974, Seite 115 Springformen und dgl.. Diese Backformen müssen vor dem Backen gefettet oder mit Papier ausgelegt werden, damit der zu backende Kuchenteig nicht mit der Wandung verkleistert und der Kuchen nach dem Backen leicht aus der Backform entfernt werden kann. Außerdem müssen diese Backformen nach dem Backen auch gereinigt werden. In den bekannten Backformen können nicht Kuchenteige jeglicher Rezeptre gebacken werden. Es gibt Kuchenteige, die trotz Fettens der Form mit deren Wandung oder auch mit dem eingelegten Papier verkleistern. Außerdem müssen die Rezepturen stets so eingestellt sein, daß der Kuchen nach dem Backen und Herausnehmen aus der Form eine ausreichende Standfestigkeit besitzt. Wegen des erforderlichen Vorbereitungs- und Reinigungsaufwandes weisen die bekannten Backformen meist einen Rauminhalt auf, welcher einer Vielzahl von Portionen entspricht, so daß der Kuchen vor dem Verzehr erst portioniert werden muß. Für kleinere Haushaltungen und Einzelhaushalte sind die bekannten Backformen meist zu groß und es bleiben Reste übrig, die nur begrenzt haltbar sind bzw. tiefgefroren werden müssen. Hierdurch verliert der Kuchen an Frische.

Für kleinere Portionen sind auch Backformen aus plissiertem Papier bekannt, wobei das plissierte Papier meist bis zum Verzehr am gebackenen Kuchen verbleibt, jedoch vor dem Verzehr entfernt werden muß. Das plissierte Papier läßt sich häufig nur schwer und nicht ganz rückstandsfrei vom Kuchen entfernen, wobei außerdem dessen Oberfläche meist beschädigt wird und hierdurch der Kuchen ein unschönes Aussehen erhält. Bleibt das Papier bis zum Verzehr am Kuchen, dann wirkt es wie eine Verpackung und verleiht dem Kuchen kein appetitanregendes Aussehen. Damit das Papier mit dem Kuchenteig nicht verkleistert, muß es mit Trennmitteln imprägniert oder beschichtet sein. Obwahl man sich bemüht, physiologisch unbedenkliche Trennmittel zu verwenden, ist nicht immer sichergestellt, daß beim Backen nicht gesundheitsschädliche Bestandteile in den Kuchen übertreten. Tratz Verwendung von Trennmitteln können nicht alle beliebigen Kuchenteige in Papierfarmen gebacken werden, sondern nur solche, die mit dem Papier nicht verkleistern. Für besonders weiche Teige, die auch nach dem Backen keine ausreichende Standfestigkeit aufweisen, ist Papier ebenfalls nicht geeignet, denn wenn das Papier vor dem Verzehr entfernt wird, dann verliert der Kuchen seine Form.

Der Erfindung liegt die Aufgabe zugrunde, eine Backform der eingangs erwähnten Art zu schaffen, die nur einmal verwendbar und billig herstellbar ist, in welcher Kuchen auch portionsweise gebacken werden können, ohne daß der gebackene Kuchen vor dem Verzehr aus der Backform entfernt werden muß und die deshalb auch für Kuchenteige jeglicher Rezeptur geeignet ist.

Die wird nach der Erfindung dadurch erreicht, daß die Backform aus einem, zusammen mit dem gebackenen Kuchen verzehrbaren, vorgebackenem Material besteht.

Die AU-A-40708/68 beschreibt ein Verfahren und eine Varrichtung zur Herstellung von Hüllen für Kuchen oder pies, speziell zur Herstellung von Biskuit-Krümel-Hüllen für Käsekuchen. Derartige Biskuit-Krümel-Hüllen bestehen aus einer Basismischung aus gemahlenen Biskuits, geschmolzener Butter, Gewürz und dgl., die in eine gefettete Blechbackfarm oder Springfarm gedrückt wird. Um hierbei auch an den Seitenflächen der Farm eine gleichmäßige Wanddicke der Hülle zu erreichen, soll als "Lehre" von oben her ein Ring in die Springfarm eingesetzt werden, dessen radiale Dicke der gewünschten Dicke der Hülle entspricht. Nachdem der Teig mit Hilfe dieser Lehre in gleichmäßiger Dicke an die Seitenwände der Springfarm und auch auf den Baden derselben angedrückt wurde, läßt man ihn durch Erhitzung oder Kühlung setzen. Wenn sich die Kuchenhülle gesetzt hat, dann wird die Füllung hineingegeben und der Kuchen wird entweder gefroren oder gebacken. Danach wird der obere Rand der Hülle auch nach beschnitten. Eine derartige Biskuit-Krümel-Hülle bildet zwar auch eine Wandung, die aus einem zusammen mit dem Kuchen gebackenen, verzehrbaren Material besteht, jedoch ist sie weder vargebacken, d.h. vor dem Einfüllen der Käsekuchenmasse einem Backvorgang unterwarfen worden, nach ist sie eine steife, d.h. selbsttragende bzw. selbststehende Backform, die dem nach flüssigen Käsekuchenteig als Farm dienen könnte. Da der Biskuit-Krümel-Teig auch nach dem Setzen keine ausreichende Festigkeit hat, ist vielmehr unbedingt eine gefettete Blechfarm bzw. Springfarm erforderlich. Die Biskuit-KrümelHülle ersetzt nicht die übliche, aus Blech bestehende Backform, sondern sie dient lediglich dazu, dem Käsekuchenteig, nachdem sie zusammen mit diesem in der Springfarm gebacken wurde, eine Umhüllung zu geben.

Die Erfindung geht also von dem Gedanken aus, die Backform aus eßbarem Material herzustellen und nach dem Backen am Kuchen zu belassen, so daß der Kuchen zusammen mit der Backform verzehrbar ist.

Derartige eßbare Backformen können in beliebigen Größen und Formen vorfabriziert, d.h. vorgebacken

2

werden. Es ist insbesondere daran gedacht, die Backformen mit kleinerem Rauminhalt herzustellen, so daß in ihnen Kuchen portionsweise gebacken werden können. Derartige Backformen sind dann auch für kleinere Haushalte und Einzelhaushalte geeignet und es können Kuchen in jeweils der gewünschten Menge gebacken werden, so daß Frische gewährleistet ist und Reste vermieden werden. Das übliche Vorbereiten und Reinigen von wiederverwendbaren Backformen entfällt. Ebenso entfällt das Entfernen einer Papierform. Die eßbare Backform verleiht dem Kuchen ein appetitliches Aussehen. Ein besonderer Vorteil der eßbaren Backformen ist auch darin zu sehen, daß sie für jegliche Teigrezebturen geeignet sind. Es Können deshalb auch neue Teigrezepturen gebacken werden, die bisher wegen Verkleisterns mit bekannten Backformen nicht gebacken werden konnten. Außerdem verleiht die eßbare Backform auch dem fertigen Kuchen eine ausreichende Standfestigkeit, so daß auch Teige, die nach dem Backen besonders weich sind und die man eher als mitzubackende Füllung betrachten könnte, problemlos gebacken werden können. Außerdem kann durch entsprechende Geschmacksstoffe die eßbare Backform so gestaltet werden, daß sie den fertigen Kuchen im Backergebnis geschmacklich beeinflußt. Man kann auch problemlos Kuchenteige zusammen mit Füllungen in einem Arbeitsgang backen. Die neue eßbare Backform sorgt also nicht nur für Arbeitserleichterung, sondern auch für große Variationsmöglichkeiten in den Teigrezepturen und der Portionierung.

Vorteilhaft besteht die Backform der neuen eßbaren Backform aus vargebackenem Waffel- oder Oblatenteig. Die eßbaren Backformen können als Hohlgefäße mit Maschinen hergestellt werden, wie sie bisher zur Herstellung beispielsweise für Waffeltüten zur Aufnahme von Eiscreme verwendet werden.

Gegebenenfalls kann die Backform auch aus Backoblatenteig bestehen.

Vorteilhaft sollte die Backform aus einem mit dem Kuchenteig verkleisternden Material bestehen, damit sich die eßbare Backform vor dem Verzehr, bei der Handhabung und beim eventuellen Transport und auch nicht während des Verzehrs von dem gebackenen Kuchen läst, sondern mit diesem eine Einheit bildet.

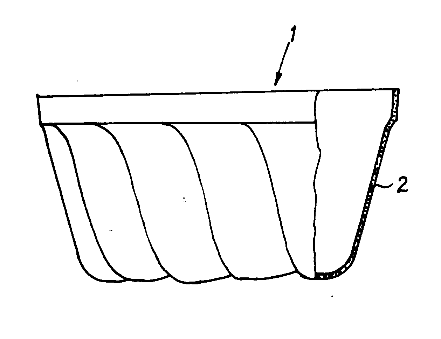

In der Zeichnung ist ein Ausführungsbeispiel der neuen Backfarm in Seitenansicht und teilweise im Schnitt dargestellt.

Die neue eßbare Backform kann jede beliebige Farm üblicher Backformen, beispielsweise Kastenfarm, Rundform, oder auch die in der Zeichnung dargestellte Gugelhupffarm aufweisen. Neben den bekannten Farmen von Backformen kann die eßbare Backform auch jede beliebige neue Farm aufweisen, denn es muß nicht mehr darauf geachtet werden, daß der Kuchen nach dem Backen auch aus der Farm entfernt werden kann. Bei der erfindungsgemäßen eßbaren Backform soll im Gegenteil die Wandung der Backform mit dem Kuchenteig verkleistern. Die Wandung 2 der eßbaren Backform 1 besteht aus einem zusammen mit dem gebackenen Kuchen verzehrbaren Material, varzugsweise aus Waffel- ader Oblatenteig. Die eßbare Backfarm wird fabrikmäßig vargefertigt, d.h. vargebacken, wozu übliche Geräte zum Backen von Hohlgebäck verwendet werden können, wie es oben bereits erwähnt wurde.

Neben den oben genannten Vorteilen hat die erfindungsgemäße eßbare Backform auch den Vorteil, daß sie den Kuchen bis zum Verzehr ummantelt und damit vor Austrocknen schützt.

## Patentansprüche

1. Backform in Form eines Hohlgefäßes, mit einer den zu backenden Kuchenteig seitlich und unten umschließenden, steifen Wandung, **dadurch gekennzeichnet**, daß die Backform (1) aus einem zusammen mit dem gebackenen Kuchen verzehrbaren, vorgebackenen Material besteht.

2. Backform nach Anspruch 1, **dadurch gekennzeichnet,** daß die Backform (1) aus vorgebackenem Waffel- oder Oblatenteig besteht.

3. Backform nach Anspruch 2, **dadurch gekennzeichnet,** daß die Backform (1) aus Backoblatenteig besteht.

4. Backform nach mindestens einem der Ansprüche 1 - 3, **dadurch gekennzeichnet,** daß die Backform (1) aus einem mit dem Kuchenteig verkleisternden Material besteht.

## Claims

1. Cake mould in the form of a hollow vessel, with a rigid wall portion surrounding laterally and from below the cake dough to be baked, characterised in that the cake mould (1) consists of a pre-baked material which may be consumed together with the baked cake.

2. Cake mould according to Claim 1, characterised in that the cake mould (1) consists of pre-baked waffle or wafer dough.

3. Cake mould according to Claim 2, characterised in that the cake mould (1) consists of baked wafer dough.

EP 0 381 177 B1

4. Cake mould according to at least one of Claims 1 to 3, characterised in that the cake mould (1) consists of a material which integrates with the cake dough.

**Revendications**

1. Moule à gâteau en forme d'un récipient creux, comprenant une paroi rigide entourant latéralement et par le bas la pâte du gâteau à cuire, caractérisé en ce que le moule (1) à gâteau est constitué d'une matière précuite, pouvant être consommée avec le gâteau cuit.

2. Moule à gâteau selon la revendication 1, caractérisé en ce que le moule (1) à gâteau est constitué d'une pâte précuite à gaufres ou à oublies.

3. Moule a gâteau selon la revendication 2, caractérisé en ce que le moule (1) à gâteau est constitué d'une pâte à feuilles de froment et d'amidon.

4. Moule à gâteau selon l'une au moins des revendications 1 à 3, caractérisé en ce que le moule (1) à gâteau est constitué d'une matière collant sur la pâte à gâteau.

4